(19) Europäisches Patentamt European Patent Office Office européen des brevets

(11) **EP 4 232 709 B1**

(12) **EUROPEAN PATENT SPECIFICATION**

(45) Date of publication and mention
of the grant of the patent:
**06.05.2026 Bulletin 2026/19**

(21) Application number: **21883381.2**

(22) Date of filing: **22.10.2021**

(51) International Patent Classification (IPC):
*F03D 13/00* (2016.01)   *F03D 13/20* (2016.01)
*F03D 13/25* (2016.01)   *B63B 35/00* (2020.01)
*B63B 35/44* (2006.01)   *B63B 22/20* (2006.01)

(52) Cooperative Patent Classification (CPC):
**B63B 75/00; B63B 22/20; B63B 39/03;**
**B63B 43/06; F03D 13/10; F03D 13/25;**
B63B 2035/442; B63B 2035/446; B63B 2039/067;
F05B 2240/93; F05B 2240/95; Y02E 10/72;
Y02E 10/727

(86) International application number:
**PCT/NO2021/050220**

(87) International publication number:
**WO 2022/086342 (28.04.2022 Gazette 2022/17)**

(54) **SPAR PLATFORM FOR A FLOATING OFFSHORE WIND TURBINE**

HOLMPLATTFORM FÜR EINE SCHWIMMENDE OFFSHORE-WINDTURBINE

PLATEFORME DE LONGERON POUR ÉOLIENNE OFFSHORE FLOTTANTE

(84) Designated Contracting States:
**AL AT BE BG CH CY CZ DE DK EE ES FI FR GR**
**HR HU IE IS IT LI LT LU LV MC MK MT NL NO PL**
**PT RO RS SE SI SK SM TR**

(30) Priority: **23.10.2020 GB 202016857**

(43) Date of publication of application:
**30.08.2023 Bulletin 2023/35**

(60) Divisional application:
**26154796.2 / 4 717 581**

(73) Proprietor: **Equinor Energy AS**
**4035 Stavanger (NO)**

(72) Inventor: **SKAARE, Bjørn**
**7023 Trondheim (NO)**

(74) Representative: **Dehns**
**10 Old Bailey**
**London EC4M 7NG (GB)**

(56) References cited:
WO-A1-03/004869   WO-A1-2010/120186
WO-A1-2010/120186   WO-A1-2018/018104
WO-A2-2005/040604   WO-A2-2010/093259
ES-A1- 2 439 777   ES-A1- 2 524 491
FR-A1- 3 036 371   GB-A- 2 587 113
US-A1- 2009 120 345   US-A1- 2011 140 426
US-A1- 2011 214 596   US-A1- 2013 243 531
US-B2- 10 392 082   US-B2- 7 877 994

**Description**

The present disclosure relates to the design of a spar platform for a floating offshore wind turbine.

Offshore wind turbines can be designed as fixed-foundation wind turbines that are fixed to the sea bed. However, for deeper waters where the wind is often stronger and more consistent, it may be difficult or uneconomical to fix a wind turbine to the sea bed. It has therefore been proposed to provide floating wind turbines in order to enable the wind turbine to be located in deeper waters. One example of a floating wind turbine has a conventional wind turbine structure mounted on a floating foundation, such as a "spar buoy" type structure. A spar buoy is an elongate, typically cylindrically shaped, buoyant structure and provides a stable support for offshore wind turbines.

When a floating wind turbine is acted on by forces, such as those caused by changes in wind speed or waves, the whole structure moves about in the water. These motions may have a large amplitude but relatively low frequency, i.e. they are large slow motions. The motions experienced are described as "heave" which is the linear vertical (up/down) motion, "sway" which is the linear lateral (side-to-side) motion, "surge" which is the linear longitudinal (front/back) motion, "roll" which is the rotation of the body about its horizontal (front/back) axis, "pitch" which is the rotation of the body about its transverse (side-to-side) axis, and "yaw" which is the rotation of the body about its vertical axis.

Floating wind turbines are typically assembled by mounting a wind turbine onto a spar buoy at an offshore location, i.e. whilst the spar buoy is floating in a body of water. There is a period of time when the spar buoy is floating in the body of water separate from the wind turbine structure, during which the spar buoy can be heavily influenced by wave motions, leading to large undesirable motions of the spar buoy. These motions can make it difficult to install the wind turbine components onto the spar buoy.

In order to minimise the wave-induced motion of the spar buoy, it has been common to carry out installation in calm, sheltered waters, such as deep water fjords. In practice, this limits the application of floating wind turbines to regions with access to sheltered waters, where the water is deep enough to accommodate the draft of the spar buoy.

WO 2010/120186 A1 discloses a floating platform for supporting an offshore wind turbine. The platform includes a ballast system comprising several ballast tanks and pumps for adding ballast to and removing ballast from the tanks. During installation and maintenance of a wind turbine, the amount of ballast in the tanks is added or removed to lower the floating structure to a desired depth.

WO 2010/093259 A2 discloses an offshore wind turbine comprising a vertical turbine unit that can be removably attached to a docking station. The turbine unit includes an elongate shaft having multiple compartments at its lower end which may be filled will sea water in order to regulate buoyancy of the shaft.

ES 2524491 A1 discloses a floating spar platform having two ballast tanks positioned at its lower end. A first ballast tank contains concrete and a second ballast tank is provided to hold ballast water. During installation, ballast water is added to the second ballast tank to lower the centre of gravity of the platform and increase its stability prior to anchoring the platform with mooring lines.

In a first aspect, the present invention provides a floating spar platform for supporting an offshore wind turbine, the spar platform comprising: at least one first ballast tank for holding adjustable ballast; and at least one second ballast tank for holding adjustable ballast, wherein the second ballast tank is arranged vertically higher than the first ballast tank. The first ballast tank is fluidly connected to the second ballast tank through a flow regulating device, and the flow regulating device is arranged such that liquid can flow from the second ballast tank to the first ballast tank under gravity when the flow regulating device is open or partially open.

The phrase "higher than" as used herein means that when a quantity of ballast is held in the two tanks, the second, higher, ballast tank will have a higher centre of mass than the first, lower, ballast tank. This may be achieved, for example, by arranging the second ballast tank vertically above the first ballast tank, or by virtue of the second ballast tank having a bottom or lower end that is arranged higher than the bottom or lower end of the first ballast tank.

In the absence of any damping or driving forces, systems will tend to oscillate at their natural frequencies. A system driven by an external force at its natural frequency will show a maximum resonant response, and will oscillate at a higher amplitude compared to when the same force is applied at another frequency. The period of the oscillations corresponding to the natural frequency is known as the natural period.

Floating structures have a natural period that is determined, in part, by their mass, shape and buoyancy. When a floating structure is acted on by oscillating forces, e.g. waves, with a period at or close to their natural period, the floating structure can experience large amplitude motions. Hence, if the structure is floating at a location where the period of the waves coincides with its natural period, the structure will experience large wave-induced motions. The floating structure may have different natural periods for different motions, e.g. heave, pitch, roll etc. The wave-induced motions should be limited during installation of a wind turbine on a floating spar platform since, if the wave-induced motions are too large, it may become impossible to mount and/or affix the wind turbine to the spar platform. By providing a spar platform with at least one ballast tank arranged higher than another, it is possible to adjust the location of the centre of gravity of the spar platform by controlling the distribution of ballast between the first and second ballast tanks. As a result, the natural period of the spar platform in pitch and roll can be controlled and/or increased. For instance, adding ballast to the second ballast tank to raise the centre of gravity of the spar platform (relative to the bottom of the spar platform) may increase the natural period of the spar platform in pitch and/or roll. This is because the natural periods of the spar platform in pitch and roll depend at least in part on the position of the centre of gravity of the spar platform relative to its centre of buoyancy. Hence, the ballast tank arrangement means that wave-induced motions in pitch and roll can be controlled and/or reduced, even in rough waters such as open sea, by adjusting the distribution of the ballast within the ballast tanks. In this way, the processes of installing a wind turbine on the floating spar platform and/or performing maintenance of a wind turbine supported by the spar platform can be made less sensitive to sea conditions.

Typically, the second ballast tank may be empty during normal operation of the floating wind turbine (i.e. when it is generating electricity). Ballast may be added to the second ballast tank during installation and/or maintenance procedures in order to move the centre of gravity of the floating structure upwards and away from the bottom of the spar platform and then the ballast may be removed after installation and/or maintenance has been completed for normal operation of the wind turbine.

The term "spar platform", as used herein, describes a floating structure, e.g. a vertically elongate buoyant structure, without a wind turbine and/or components of a wind turbine installed thereon. That is to say, the spar platform does not include a tower, a nacelle and/or a rotor of a wind turbine. Wind turbine components (e.g. a tower, nacelle and/or rotor) may be installed on the spar platform to form a floating offshore wind turbine.

The spar platform may comprise multiple, i.e. more than one, first ballast tanks and/or second ballast tanks. In such an arrangement, all of the second ballast tanks may be arranged vertically higher than all of the first ballast tanks.

The adjustable ballast may be a liquid. For instance, the adjustable ballast may be water, preferably sea water. Hence, the first and second ballast tanks may be watertight, i.e. able to hold a liquid. Sea water is a readily available source of ballast at an offshore location.

The first and/or second ballast tanks may be defined within an internal compartment of the spar platform. The internal compartment may be open at one end (e.g. the upper end of the spar platform when in use) and/or have an opening to allow ballast to be added to the internal compartment. The spar platform may be hollow and closed at one end, thereby defining the internal compartment within the hollow interior of the spar platform.

The internal compartment may be separated into the first and second ballast tanks by a divider arranged across the compartment. The divider may be arranged such that when the spar buoy is in use the divider is arranged horizontally. The divider is preferably impermeable and provides a water tight seal between the first and second ballast tanks. Accordingly, in the absence of other means, liquid (e.g. sea water) may not pass through the divider and between the first and second ballast tanks. In this way, ballast can be held in the second ballast tank, above the first ballast tank, and is prevented from draining into the first ballast tank through the divider.

Alternatively, two separate tanks may be arranged in the internal compartment in order to provide the first and second ballast tanks. The tanks may be water tight and hence allow liquid ballast to be held in each of the tanks.

The first and/or second ballast tanks may be arranged on, e.g. mounted on, an exterior surface of the spar platform. This may allow for easy and simple installation of the ballast tank(s) on the spar platform. The first and/or second ballast tanks may be removably mounted on the exterior surface of the spar platform. In this way it may be possible to add the ballast tank(s) when necessary, e.g. during installation or maintenance of a floating offshore wind turbine, and remove the ballast tank(s) when not required. This may also allow the positions, e.g. their distance from the bottom of the spar platform, of the ballast tank(s) to be adjusted.

The spar platform may have a vertical length of greater than 50m, preferably greater than 100m.

When the first and second tanks are empty, the spar platform may have a displacement of greater than 3000 tonnes, preferably greater than 9000 tonnes, more preferably greater than 15000 tonnes.

When the first and second ballast tanks are empty, the draft of the spar platform may be greater than 30m, preferably greater than 40m, more preferably greater than 50m.

When the ballast tanks are empty, the spar platform may have a mass of at least 7000 tonnes, preferably at least 9000 tonnes, more preferably at least 10000 tonnes.

The cross sectional area of the spar platform may vary along its length, i.e. the cross sectional area of the spar platform may not be constant. As a result, when the spar platform is floating in a body of water, it is possible to change the cross sectional area of spar platform at the waterline by controlling the height of the spar buoy relative to the body of water. By providing a spar platform in which the cross sectional area of the spar buoy at the waterline can be changed, the natural period of the spar buoy in heave, pitch and roll can be controlled and/or increased. For example, reducing the cross sectional area of the spar buoy at the waterline may increase the natural period of the spar buoy in heave, pitch and/or roll. This is because the natural periods of the spar buoy in heave, pitch and roll depend at least in part on the cross sectional area of the spar platform at the waterline. Hence, the motion characteristics can be made more favourable for installing a wind turbine by controlling the cross sectional area of the spar platform at the waterline.

The spar platform may comprise one or more tapered portion(s) e.g. one or more frustoconical portion(s). The entire spar platform may be tapered or only a portion(s) of the spar buoy may be tapered.

The spar platform may have a portion with a cross sectional area that is smaller than the cross sectional area of another portion. For example, the spar platform may comprise a first portion with a cross sectional area that is smaller than the cross sectional area of a second portion.

The spar platform may have a plurality of portions of different cross sectional area. Each of these portions may have a constant cross sectional area along its length. Between the portions of constant cross section, the spar platform may comprise transition sections with non-constant cross section. For example the transitions sections may be frustoconical sections between the portions of constant cross section.

One or more of the portions of constant cross section may have a length of at least 10m, preferably at least 20m, more preferably at least 30m.

The spar platform may decrease in cross sectional area from the bottom of the spar platform to the top. That is to say, in use, i.e. when the spar platform is floating in a body of water, the region of the spar platform at the lower vertical end may have a larger cross sectional area than region of the spar platform at the upper vertical end. This may be achieved by a constant change in cross sectional area, one or more step changes in cross sectional area and/or one or more transition sections between sections of approximately constant cross sectional area. For example, the cross sectional area at the bottom of spar platform may be between $75m^2$ to $350m^2$, e.g. $175m^2$. The cross sectional area of the top of the spar platform may be between $15m^2$ to $75m^2$, e.g. $50m^2$.

The spar platform may be circular, or partially circular in cross-section.

The spar platform may include one or more pump(s) arranged to pump ballast into and/or out of the first and/or second ballast tanks. In this way, the amount of ballast in the first and/or second ballast tanks can be controlled without the need for external pumping equipment, for example pumping equipment provided on a vessel adjacent to the spar platform. The pumps make it possible to adjust the total amount of ballast in the spar platform by adding ballast to the tanks or removing ballast from the tanks. The pumps also make it possible to adjust the distribution of ballast between the first and second tanks. As discussed above, this has an effect on the centre of gravity of the spar platform.

The pump(s) may be fluidly connected to the first and/or second tanks by piping.

The pump(s) may be arranged to pump water, e.g. sea water, into/out of the ballast tanks.

The pump(s) may be centrifugal pumps.

One or more of the pump(s) may be fluidly connected to both the first ballast tank and the second ballast tank. In this way, the pump(s) can be used to pump ballast into and out of each of the first and second ballast tanks. The pumps(s) may also be used to pump ballast from the first ballast tank to the second ballast tank and/or from the second ballast tank to the first ballast tank. Thus, the location of the ballast associated with the spar platform can easily be controlled.

The pump(s) may be removably installed on the spar platform. In this way, the pump(s) can be easily replaced and/or repaired, for instance if they become damaged, This also allows for the pump(s) to be removed from the spar platform when pumping is not required, and installed only when needed.

The flow regulating device is for controlling a flow of fluid (e.g. ballast) between the first and second ballast tanks. The flow regulating device may be a valve, such as a control valve. The flow regulating device may be operable in two states, a first state in which fluid may pass through the flow regulating device such that the first and second ballast tanks are fluidly connected via the flow regulating device, and a second state in which fluid cannot pass between the first and second ballast tanks via the flow regulating device. When in the second state, there may be no fluid connection between the first and second ballast tanks. For instance, when the flow regulating device is a control valve then opening the control valve, fully or partially, may fluidly connect the first ballast tank with the second ballast tank. When the valve is closed, there may be no fluid connection between the first and second ballast tanks.

By providing a flow regulating device, some or all of the ballast within the second ballast tank can be easily and quickly transferred to the first ballast tank. As discussed above, transferring ballast from the second ballast tank to the first ballast tank will lower the centre of gravity of the spar platform and have an effect on the natural periods of the spar platform in roll and pitch.

Whilst installing a wind turbine on the spar platform, the spar platform may be in a temporary installation state. In the installation state, the natural periods of the spar platform may be such that they do not align with the period of the waves acting on the spar platform. This may be achieved by holding adjustable ballast in the second ballast tank, whilst holding relatively little or no adjustable ballast in the first ballast tank. Once the wind turbine has been installed, the spar platform may be moved from the installation state to an operational state designed to stably support the floating offshore wind turbine during its operation (i.e. when it is generating electricity). This may be achieved by removing adjustable ballast from the second tank and/or adding adjustable ballast to the first tank. For instance, adjustable ballast may be passed from the second ballast tank to the first ballast tank via the flow regulating device. Hence, the flow regulating device provides a means to easily change the state of the spar platform, from a temporary installation state to an operational state.

The flow regulating device, e.g. a control valve, may be operated by electrical, hydraulic or pneumatic actuators.

The flow regulating device is arranged to allow for liquid (i.e. liquid ballast) within the second ballast tank to drain to the first ballast tank under gravity, when the flow regulating device is in the first state, e.g. when the flow regulating device is open or partially open. This may be achieved by arranging the flow regulating device at the lowest point within the second ballast tank. That is to say, the flow regulating device may be arranged such that it is at the lower vertical end of the second ballast tank when the spar buoy is in use, i.e. when the spar buoy is floating in a body of water. For example, when the first and second ballast tanks are separated by a divider, the flow regulating device may be arranged in the divider to provide a controllable fluid passage through the divider. With such an arrangement, it is not necessary to pump the ballast from the second tank to the first ballast tank, for example using one or more of the pumps described above. Hence, this process can be achieved more efficiently since there is no need to power pumps.

The bottom of the second ballast tank may slope downwardly towards the flow regulating device. Hence, liquid within the second ballast tank will flow down the slope towards the flow regulating device under the action of gravity. This may improve draining of the second ballast tank via the flow regulating device.

The spar platform may be arranged such that when the first and second ballast tanks are empty, the centre of gravity of the spar platform is lower than its centre of buoyancy. That is to say, in use, the centre of gravity of the spar platform may be vertically below the centre of buoyancy of the spar platform. To achieve this, the spar platform may include fixed ballast.

When the centre of gravity of the spar platform is vertically below the centre of buoyancy, any angular displacement of the floating structure will produce a righting moment that will act to oppose the angular displacement. Hence, the spar platform will remain stable against overturning so long as the centre of gravity is vertically below the centre of buoyancy. As the distance between the centre of gravity and the centre of buoyancy is decreased, this stabilising effect is reduced.

The fixed ballast may be arranged at the lower end of the spar platform. The position of the fixed ballast at the lower end of the spar platform will cause the centre of gravity of the spar platform to be closer to the bottom of the spar platform compared to the centre of gravity of the spar platform without the fixed ballast. As a result, the spar platform will have greater stability in order to resist angular displacement and prevent the spar platform from overturning.

When the first and second ballast tanks are empty, the fixed ballast may account for most of the mass of the spar platform. For example, at least 50%, and preferably greater than 70% of the mass of the spar platform. In some cases, the fixed ballast may account for at least 90% of the mass of the spar platform when the ballast tanks are empty.

The fixed ballast may have a mass of at least 4500 tonnes, preferably at least 6500 tonnes, more preferably at least 8000 tonnes.

The fixed ballast may include a heave plate. The heave plate may be affixed to the lower end of the spar platform, and may comprise a circular plate having a larger diameter than the lower end of the spar platform. In addition to adding ballast to the spar platform, the heave plate provides damping to the spar platform against heave motion and also increases the hydrodynamic added mass of the spar platform in heave. Hydrodynamic added mass is a measure of the additional inertia of a structure, such as the spar platform, as a result of the water acting on the structure. When a structure moves through water, additional inertial forces act on the structure because the structure must move a volume of the surrounding water as it moves through it.

One or both of the first and second ballast tanks may be sized such that they can hold a volume of adjustable ballast that has a mass that is approximately the same mass (e.g. at least 85% of the mass) as a wind turbine to be installed on the spar platform. The first and/or second ballast tanks may each have a volume of up to $1500m^3$, optionally up to $2000m^3$, or up to $2500m^3$. This may allow for up to 1500 tonnes, 2000 tonnes, or 2500 tonnes respectively of water to be held in the first and/or second ballast tanks.

The first and second ballast tanks may have equal volume. Alternatively, the second ballast tank may have a larger volume than the first ballast tank. This may make it possible to hold a larger mass in the second ballast tank. Hence, the maximum achievable distance between the bottom of the spar platform and the centre gravity can be increased.

The spar platform may comprise a controller. The controller may be arranged to adjust the ballast within the first and/or second ballast tanks. For instance, the controller may be arranged to control operation of the pump(s) and/or flow regulating device.

In a second aspect, the present invention may provide a floating offshore wind turbine comprising a wind turbine mounted on the floating spar platform of the first aspect. The floating offshore wind turbine of the second aspect may include any one or more or all of the optional features discussed above in respect of the first aspect.

The wind turbine may include a tower. The tower may be mounted, preferably removably mounted, on the spar platform.

The wind turbine may comprise a nacelle. The nacelle may be mounted, e.g. removably, on the tower, preferably at the top of the tower. The nacelle may be rotatably mounted to the tower. A generator and its associated electronics may be mounted, e.g. removably mounted, in or on the nacelle.

One or more rotor blades may be mounted, e.g. removably mounted, via a rotor hub to the nacelle. Preferably, the generator is configured to be driven by rotation of the rotor hub. The wind turbine may include, for example, three rotor blades. The rotor blades may be rotatably mounted to the rotor hub, for example such that their pitch may be controlled. The rotor hub and rotor blades together may form a rotor of the wind turbine.

The nacelle, the generator (and associated electronics), and the rotor may together form a rotor-nacelle assembly.

The wind turbine may have a rotor diameter of greater than 100m, more preferably greater than 150m and most preferably greater than 200m. For instance, the wind turbine may have a rotor diameter of between 160m and 250m. Hence, the rotor blades may each have a length greater than 50m, greater than 75m or greater than 100m.

The rotor hub is preferably suitably located to accommodate the rotor. Accordingly, the rotor hub height of the wind turbine may be greater than 100m, greater than 150m or greater than 200m. To accommodate the rotor hub at these heights, the tower height may be greater than 100m, greater than 150m or greater than 200m.

The tower may have a mass of between 500 and 1000 tonnes. The rotor-nacelle assembly may have a mass of between 500 and 1000 tonnes. Hence, the wind turbine may have a mass of between 1000 and 2000 tonnes.

The wind turbine may have a rated power output of greater than 8MW, preferably greater than 10MW and more preferably greater than 12MW.

Certain embodiments of the present invention will now be described, by way of example only, and with reference to the accompanying drawings, in which:

Figure 1 shows a floating offshore wind turbine;
Figure 2 shows a spar platform for supporting an offshore wind turbine;
Figure 3 shows the floating spar platform of Figure 2 in an initial state;
Figure 4 shows the floating spar platform of Figure 2 in an installation state that is optimised for installing a wind turbine on the platform, compared to the spar platform in the initial state; and
Figures 5A-5C are graphs showing relationships between wave period and the amplitude of wave-induced motions in surge, heave and pitch for a spar platform in the initial state and the installation state.

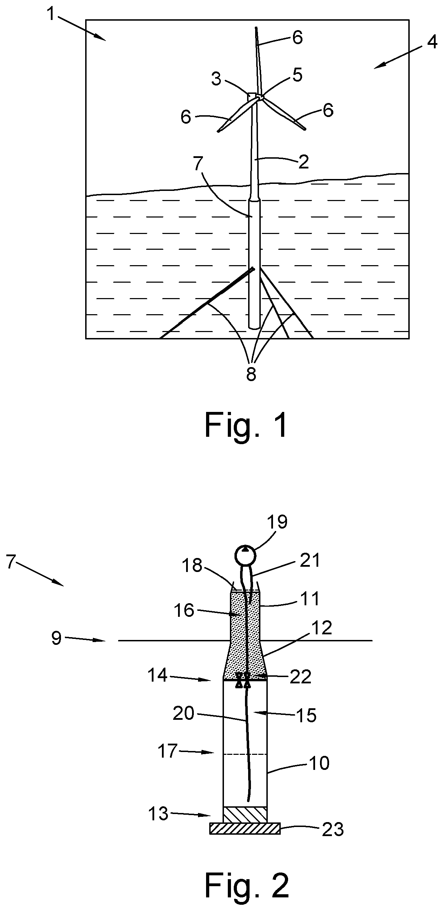

Figure 1 illustrates a floating offshore wind turbine 1. The floating wind turbine 1 comprises a tower 2 and a nacelle 3 mounted at the top of the tower 2, and a rotor 4, comprising a rotor hub 5 and a plurality of blades 6, rotatably mounded to the nacelle 3.

The nacelle 3 may be configured to rotate about a longitudinal axis of the tower 2, which is approximately vertical in operation, and is controlled in operation to face into oncoming wind.

The rotor 4 is configured to rotate about a substantially horizontal axis so that the blades 6 are driven to rotate by the oncoming wind. The rotor 4 is coupled to a drive shaft of a generator (not shown) housed within the nacelle 3.

The tower 2 is mounted on a spar platform 7, which is tethered to the sea bed by moorings 8.

Floating offshore wind turbines are usually designed with large rotor diameters to generate a high output power to maximise cost efficiency. Smaller offshore wind turbines might be rated at around 3-4MW and have rotor diameters of only about 100m. Typically, however, floating offshore wind turbines have power outputs rated at greater than 8MW and today such wind turbines are commonly designed to achieve a rated power output of around 12-13 MW, and may have a rotor diameter of between 160m and 250m.

Figure 2 shows the spar platform 7 for supporting the wind turbine structure at an offshore location. The spar platform 7 has a classic spar buoy shape, i.e. an elongate, thin, vertical, substantially cylindrical column. The spar platform 7 comprises a lower cylindrical portion 10 and an upper cylindrical portion 11. The upper and lower portions 11, 10 each have a substantially constant radius along their lengths. The radius of the lower cylindrical portion 10 is larger than the radius of the upper cylindrical portion 11.

The upper and lower cylindrical portions 11, 10 are connected by a cone portion 12. The cone portion 12 is a frustoconical portion that has a radius at one end (i.e. the lower end) that is equal to the radius of the lower cylindrical portion 10 and a radius at the other end (i.e. the upper end) that is equal to the radius of the upper cylindrical portion 11.

In Figure 2 the spar platform 7 is shown floating in a body of water such that the waterline 9 resides in the upper cylindrical section.

The spar platform 7 has a fixed ballast 13 at its lower end. This helps to stabilise the spar platform 7 against overturning when it is floating in a body of water.

Optionally, the spar platform 7 may have a heave plate 23 affixed to its lower end. The spar platform 7 of Figure 2 is shown with such an optional heave plate 23. The heave plate 23 comprises a horizontal circular plate having a larger diameter than the lower cylindrical portion 10 of the spar platform 7. This acts to add damping to the spar platform 7 against heave motion and also increases the hydrodynamic added mass of the spar platform in heave. The heave plate 23 may form part of the fixed ballast 13.

An internal compartment is defined within the spar platform 7. The internal compartment is separated by a horizontal deck 14. The horizontal deck 14 provides a fluid tight partition between upper and lower portions of the internal compartment. The lower portion of the internal compartment defines a first ballast tank 15 and the upper portion of the internal volume, separated from lower portion by the horizontal deck 14, defines a second ballast tank 16. Hence, the spar platform 7 includes a first ballast tank 15, and a second ballast tank 16 that is arranged vertically above the first ballast tank 15.

Ballast, such as sea water, can be held in the first and/or second ballast tanks 15, 16. Accordingly, the total amount of ballast held in the spar platform 7 can be adjusted by adding ballast to, or removing ballast from, one or both of the ballast tanks 15, 16. In Figure 2, the level of ballast within the first ballast tank 15 is shown by the dashed line 17, and the level of ballast within the second ballast tank 16 is shown by the dashed line 18.

The spar platform 7 of Figure 2 includes a pump 19 for pumping water into and out of the first and second ballast tanks 15, 16. The pump 19 is fluidly connected to the first ballast tank 15 by a first hose 20 that passes through the horizontal deck 14. The first hose 20 extends to the bottom of the first ballast tank 15 so that substantially all of the ballast held in the first ballast tank 15 can be pumped out by the pump 19 via the first hose 20. A second hose 21 fluidly connects the pump 19 with the second ballast tank 16 in a similar way.

In alternative arrangements, the spar platform 7 may not include a pump 19. Rather, when pumping is required, the spar platform 7 may be fluidly connected to external pumping equipment, e.g. located on board an offshore installation or vessel adjacent to the spar platform 7.

The first and second ballast tanks 15, 16 are fluidly connected with one another via a control valve 22 in the horizontal deck 14. When the control valve 22 is closed, water held within the second ballast tank 16 is prevented from flowing into the first ballast tank 15. The control valve 22 can be opened to allow water to pass from the second ballast tank 16 to the first ballast tank 15 under the action of gravity. The bottom of the second ballast tank 16 (i.e. the upper surface of the horizontal deck 14) may include a slope directed downwards towards the control valve 22 so that liquid within the second tank will flow towards the control valve 22 under the action of gravity.

The spar platform 7 may include a controller (not shown) that can be used to adjust the ballast in the first and/or second ballast tanks 15, 16 by controlling operation of the pump 19 and/or the control valve 22.

Floating structures, such as the spar platform 7 shown in Figure 2, are subject to wave forces that cause them to move about in the water. As discussed above, these wave-induced motions can have large amplitudes when the waves acting on the structure have a period that is at, or close to, the structure's natural period.

For a cylindrical structure floating in a body of water, the natural period of the floating structure in heave $T_{heave}$ is given by the following equation:

$$T_{heave} = \sqrt{\frac{m + A_{33}}{\rho g \pi R_{wl}^2}}, \qquad (1)$$

Here, m is the overall mass of the floating structure, $A_{33}$ is the hydrodynamic added mass in heave, p is the density of the water in which the structure is floating, g is gravitational acceleration, and $R_{wl}$ is the radius of the structure at the water line. The heave motion of the structure (i.e. the linear vertical, up/down motion) will have a large amplitude if the structure is acted on by waves having a period at or close to its natural period in heave $T_{heave}$.

For a cylindrical structure, the moment of inertia $I$ in roll and pitch can be assumed to be identical. The same applies for the hydrodynamic added mass in roll $A_{44}$ and pitch $A_{55}$, i.e. for a cylindrical structure $A_{44} = A_{55}$. Accordingly, the natural period of a floating structure in roll $T_{roll}$ and pitch $T_{pitch}$ can be expressed with the following equation:

$$T_{roll} = T_{pitch} = \sqrt{\frac{I + A_{55}}{\rho g \frac{\pi}{4} R_{wl}^2 + \rho g V z_B - m g z_G}}, \qquad (2)$$

were $V$ is the volume of the submerged body, $z_B$ is the vertical distance between the waterline 9 and the centre of buoyancy of the structure, and $z_G$ is the vertical distance between the waterline 9 and the centre of gravity of the structure.

In Equation (2), both $z_B$ and $z_G$ are measured relative to the waterline 9. If the centre of gravity or the centre of buoyancy is below the waterline 9, $z_B$ and $z_G$ respectively are expressed as negative values. On the other hand, if the centre of gravity or the centre of buoyancy is above the waterline 9, $z_B$ and $z_G$ respectively are expressed as positive values.

Based on Equations 1 and 2, it will be appreciated that the natural periods of a floating structure in heave, pitch and roll can be adjusted through control of its mass m, the position of its centre of gravity $z_G$, and the radius of the structure at the waterline $R_{wl}$. The arrangement of the first and second ballast tanks 15, 16 of the spar platform 7 of Figure 2 allows for increased control over these properties, and hence increased control over the natural periods of the spar platform 7.

The centre of gravity of the spar platform 7 can be changed by adjusting the ballast in the first and/or second ballast tanks 15, 16. For instance, pumping water into the second ballast tank 16 and/or pumping water out of the first ballast tank 15 may raise the centre of gravity (relative to the bottom of the spar platform 7) and decrease the distance between the centre of gravity and the centre of buoyancy of the spar platform 7. This will reduce the value of the denominator in Equation 2 and increase the natural periods in pitch and roll $T_{pitch}$, $T_{roll}$.

Conversely, pumping water out of the second tank and/or pumping water into the first tank may lower the centre of gravity (relative to the bottom of the spar platform 7) and increase the distance between the centre of gravity and the centre of buoyancy of the spar platform 7. This will increase the value of the denominator of Equation 2 and reduce the natural periods in pitch and roll $T_{pitch}$, $T_{roll}$.

It is also possible to change the radius of the spar platform 7 at the waterline 9. The vertical position of the spar platform 7 relative to the body of water can be changed by adjusting the ballast in the first and/or second ballast tanks 15, 16. Pumping water into the first and/or second ballast tanks 15, 16 may lower the vertical position of the spar platform 7, and pumping water out of the first and/or second ballast tanks 15, 16 may raise the vertical position of the spar platform 7. Since the radius of the spar platform 7 varies along its length, the radius of the spar platform 7 at the waterline 9 can be changed by adjusting the vertical position of the spar platform 7 in the body of water.

Decreasing the radius of the spar structure at the waterline 9 will cause the values of the denominators of Equations 1 and 2 to decrease, thereby increasing the natural periods in heave, roll and pitch $T_{heave}$, $T_{roll}$, $T_{pitch}$. Conversely, increasing the radius of the spar structure at the waterline 9 will cause the denominators of Equations 1 and 2 to increase, thereby reducing the natural periods in heave, roll and pitch $T_{heave}$, $T_{roll}$, $T_{pitch}$.

During installation of a wind turbine on a floating spar platform 7, or whilst performing maintenance on a floating offshore wind turbine, it is desirable to minimise wave-induced motions of the floating structure. As the wave-induced motions become larger it becomes increasingly difficult to perform the installation and/or maintenance operations. These processes may even become impossible if the wave-induced motions become too large.

By adjusting the natural periods of the spar platform 7 in heave, roll and pitch $T_{heave}$, $T_{roll}$, $T_{pitch}$, it is possible to move the natural periods of the spar platform 7 away from the periods of the waves acting on the spar platform 7. Hence, it is possible to control and/or reduce the amplitude of the wave-induced heave, roll and pitch motions by adjusting the natural periods of the spar platform 7.

It will be appreciated that pitching motions (i.e. rotational motion about the transverse axis) of the spar platform 7 will cause corresponding surge motion (i.e. linear front/back motion). Similarly, rolling motions (i.e. rotational motion about the horizontal front/back axis) will lead to corresponding sway motion (i.e. linear side-to-side motion). Hence, reducing the amplitude of the wave-induced pitching and rolling motions can also reduce the amplitude of the wave-induced surge and sway motions respectively.

An example of how the spar platform 7 may be controlled in order to limit wave-induced motions during installation of a floating offshore wind turbine will now be described with reference to Figures 2, 3 and 4.

The installation process may take place at a suitable offshore location (i.e. an installation location), for instance adjacent to a proposed operational site for a floating offshore wind turbine (i.e. where the floating offshore wind turbine will be located when generating electricity).

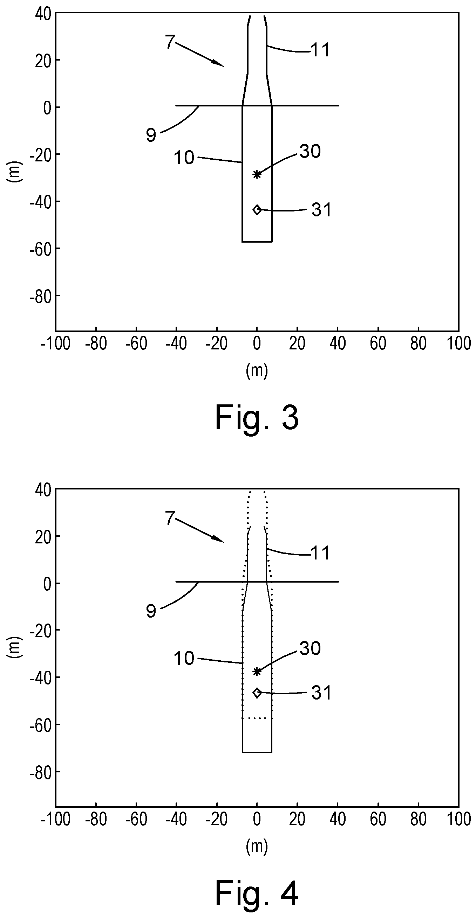

Figure 3 shows an initial state of the spar platform 7 at the installation location. In the initial state, the first and second ballast tanks 15, 16 may be empty. In Figure 3, the y-axis represents vertical distances (in metres) relative to the waterline 9 (shown by the horizontal line at 0m), and the x-axis shows horizontal distances (in meters). The centre of buoyancy 30 and the centre of gravity 31 of the spar platform 7 are shown below the waterline 9, with the centre of buoyancy 30 vertically above the centre of gravity 31.

In the initial state shown in Figure 3 the spar platform 7 is at a vertical position such that the large-radius lower cylindrical portion 10 is at the waterline 9. Owing to the fixed ballast 13 at the bottom of the spar platform 7, the centre of gravity 31 is close to the bottom of the spar platform 7. In this configuration, the natural periods of the spar platform 7 in heave, roll and pitch $T_{heave}$, $T_{roll}$, $T_{pitch}$ may closely align with the period of wave motions. As a result, the spar platform 7 may experience large wave-induced motions, making it difficult or indeed impossible to install the wind turbine on the spar platform 7.

In order to reduce the amplitude of the wave-induced motions and make installation simpler, the spar platform 7 may be placed into a temporary installation state designed to limit wave-induced motion of the spar platform 7. This may be achieved by adding water to the first and/or second ballast tanks 15, 16 such that the natural period of the spar platform 7 in heave, roll and pitch $T_{heave}$, $T_{roll}$, $T_{pitch}$ do not coincide with the period of the waves acting on the spar platform 7.

Typically, waves have periods in the range of 5 to 20 seconds. Hence, the installation state may be such that the natural periods of the spar platform 7 in heave, roll and pitch $T_{heave}$, $T_{roll}$, $T_{pitch}$ are greater than 20 seconds.

Figure 4 shows the installation state of the spar platform 7 (solid line) compared to the initial state (dashed line). Figure 4 also shows the centre of gravity 31 and centre of buoyancy 30 of the spar platform 7 in the installation state.

In the installation state, the spar platform 7 is at a vertical position such that the upper cylindrical portion 11 is at the waterline 9. Since the radius of the lower cylindrical portion 10 is larger than the radius of the upper cylindrical portion 11, the radius of the spar platform at the waterline $R_{wl}$ is less in the installation state compared to the initial state.

Also, the centre of gravity 31 is further from the bottom of the spar platform 7 in the installation state and closer to the centre of buoyancy 30 compared to the initial state. This can be seen through a comparison of Figures 3 and 4.

Thus, for the installation state, the values of the denominators in Equations 1 and 2 are less than in the initial state. Hence, the natural periods of the spar platform 7 in heave, roll and pitch $T_{heave}$, $T_{roll}$, $T_{pitch}$ are greater.

If the centre of gravity 31 rises above the centre of buoyancy 30 then the spar platform 7 may become unstable and less able to resist overturning. Hence, in the installation state, the centre of gravity 31 should remain vertically below the centre of buoyancy 30.

The spar platform 7 may be moved from the initial state to the installation state by pumping water into the second ballast tank 16. This increases the overall mass m of the spar platform 7 and lowers the vertical position of the spar platform 7 in the water. Moreover, given that the second ballast tank 16 is arranged vertically above the first ballast tank 15, and is displaced from the bottom of the spar platform 7, adding water to the second ballast tank 16 raises the position of the centre of gravity 31 relative to the bottom of the spar platform 7. That is to say, adding water to the second ballast tank 16 increases the distance between the bottom of the spar platform 7 and the centre of gravity 31.

Water may also be pumped into the first ballast tank 15 in order to move the spar platform 7 to the installation state from the initial state. However, doing so will reduce the effect that pumping water into the second ballast tank 16 will have on the relative position of the centre of gravity 31. Hence, if water is pumped into the first ballast tank 15, the quantity may be less than the quantity of water pumped into the second ballast tank 16.

In the installation state, the amplitude of wave-induced motions in heave, roll and pitch are reduced compared to the initial state. This facilitates installation of a wind turbine on the spar platform 7, and makes installation possible in a wider range of sea conditions.

Once the spar platform 7 is in the installation state the wind turbine can be installed.

The wind turbine may be transported to the installation location, for instance, on the deck of a barge. In this example, the floating wind turbine is a fully assembled wind turbine, i.e. with most or all of the major wind turbine components (the tower 2, nacelle 3 and/or rotor components) assembled together. At the installation location, the floating wind turbine may be lifted by a crane into a mating relationship with the spar platform 7 and then coupled to the spar platform 7 in the known manner.

Alternatively, the wind turbine may be transported to the installation location in multiple pieces, and assembled on the spar platform 7. For instance, the tower 2 may be lifted from the barge by the crane and moved into a mating arrangement with the spar platform 7. Once the tower 2 has been coupled to the spar platform 7 in the known manner, the crane may then be used to lift the nacelle 3 from the barge and move it into a mating arrangement with the tower 2, where it can be coupled to the tower 2. This process can be repeated until the wind turbine has been fully assembled on the spar platform 7.

Installing the wind turbine on the spar platform 7 increases the total mass of the floating structure, i.e. the spar platform 7 and the wind turbine. The centre of gravity 31 of the floating structure will also be raised relative to the bottom of the spar platform 7 as a result of installing the wind turbine. The addition of the generator and rotor components, in particular, will affect the centre of gravity 31 of the floating structure since their relatively large masses are arranged at the top of the tower 2. This may cause the centre of gravity 31 of the floating structure to rise above the centre of buoyancy 30 which, as discussed above, can cause the floating structure to become unstable. Hence, once the wind turbine is installed on the spar platform 7, the spar platform 7 may be moved into an operational state such that the wind turbine can be stably supported.

In the operational state the centre of gravity 31 of the floating structure is vertically below the centre of buoyancy 30, and the distance between the centre of gravity 31 and the centre of buoyancy 30 is such that angular displacement of the floating structure produces a righting moment to oppose the angular displacement. Hence, the operational state ensures that the floating structure will remain stable against overturning.

In order to move from the installation state to the operational state, a portion of the water in the second ballast tank 16 may be moved to the first ballast tank 15 by opening the control valve 22. Some of the water in the second ballast tank 16 may also be removed from the spar platform 7, for instance by pumping it overboard. In this way, the centre of gravity 31 is moved closer to the bottom of the spar platform 7. Water may be removed from the spar platform 7, for instance, to account for the additional mass of the wind turbine and to ensure that the floating structure does not sit too low in the water.

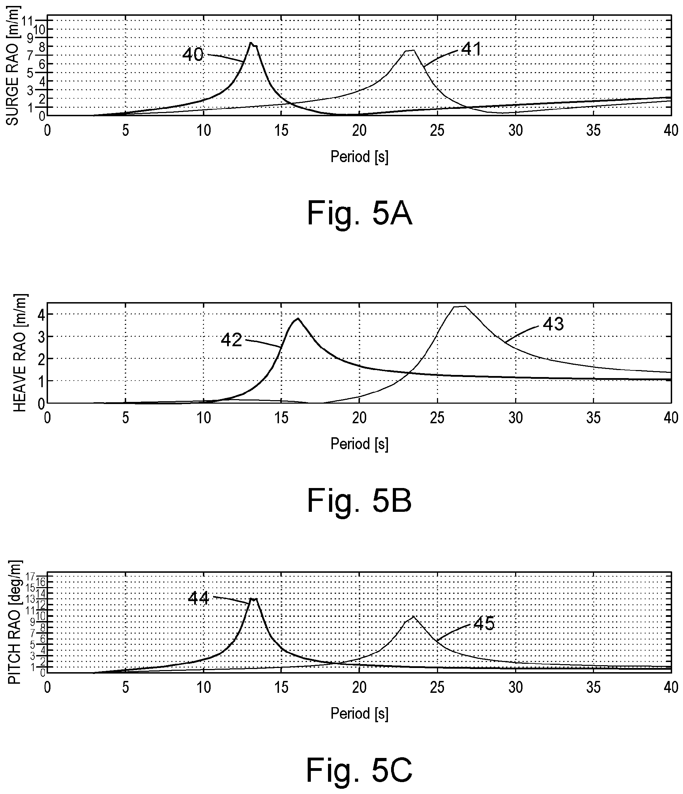

The effect that moving the spar platform 7 from the initial state to the installation state has on the wave-induced motion of the spar platform 7 can be seen from Figures 5A-C.

Figures 5A-C are graphs showing how the amplitude of wave-induced surge motions (Figure 5A), heave motions (Figure 5B) and pitch motions (Figure 5C) vary when the spar platform 7 is acted on by waves of differing periods. The period of the wave motions experienced by the spar platform 7 are given along the x-axes, and the amplitude of the response of the spar platform 7 in surge, heave and pitch is given along the y-axes. The response amplitude of the surge and heave wave-induced motions (i.e. Figures 5A and 5B) is measured in m/m, i.e. indicating the amplitude of the wave-induced motion of the spar platform 7 relative to the height (i.e. amplitude) of the waves acting on the platform. For instance, an amplitude response of 10 m/m indicates that the amplitude of the wave-induced motion is 10m when the spar platform 7 is acted on by a 1m high wave, and 20m when acted on by a 2m high wave, and so on. In Figure 5C, the response amplitude of the pitch wave-induced motion is measured in degrees/m, i.e. indicating the amplitude of the wave-induced rotation of the spar platform 7 about its transverse axis relative to the height of the waves acting on the spar platform 7. Hence, the smaller the response amplitude, the smaller the wave-induced motion of the spar platform 7.

In Figure 5A, curve 40 indicates the amplitude of wave-induced surge motion for the spar platform 7 in the initial state. As can be seen, the peak amplitude response of the wave-induced surge motion of the spar platform 7 in the initial state is approximately 8.5 m/m, and this occurs when the spar platform 7 is acted on by waves having a period of approximately 13 seconds.

Curve 41 indicates the amplitude of wave-induced surge motion for the spar platform 7 in the installation state. The peak amplitude response of the wave-induced surge motion of the spar platform 7 in the installation state is approximately 7.5 m/m. This is smaller than the peak amplitude response of the spar platform 7 in the initial state, and occurs when the spar platform 7 is acted on by waves having a period of approximately 23 seconds.

In Figure 5B, curve 42 in Figure 5B shows the amplitude of wave-induced heave motion for the spar platform 7 in the initial state. The peak amplitude response of the wave-induced heave motion is approximately 4 m/m and this occurs when the waves acting on the spar platform 7 have a period of approximately 16 seconds.

Curve 43 shows the amplitude of wave-induced heave motion for the spar platform 7 in the installation state. The peak amplitude response of the wave-induced heave motion is approximately 4 m/m and this occurs when the waves acting on the spar platform 7 have a period of approximately 27 seconds.

With reference to Figure 5C, curve 44 shows the amplitude of the wave-induced pitch motion for the spar platform 7 in the initial state. When the spar platform 7 is acted on by waves having a period of approximately 13 seconds it experiences the largest wave-induced pitch motion, which is approximately 13 degrees/m.

Curve 45 shows the amplitude of the wave-induced pitch motion for the spar platform 7 in the installation state. The peak amplitude response of the wave-induced pitch motion of the spar platform 7 in the installation state is approximately 10 degrees/m. This is smaller than the peak amplitude response of the spar platform 7 in the initial state, and occurs when the spar platform 7 is acted on by waves having a period of approximately 23 seconds.

It will be noted that in the initial state the spar platform 7 experiences the largest amplitude wave-induced motions when it is acted on by waves having a period coinciding with the typical period of wave motions, i.e. having a period between 5 and 20 seconds. Hence, the spar platform 7 in the initial state will tend to experience large wave-induced motions in typical sea conditions.

However, compared to the initial state, the wave-induced motions experienced by the spar platform 7 in the installation state are small when the spar platform 7 is acted on by waves having a period between 5 to 20 seconds (i.e. typical wave periods). In the installation state, the largest wave-induced motions are experienced when the spar platform 7 is acted on by waves having periods of over 20 seconds, which are less likely to occur in normal sea conditions. Hence, in the installation state, the spar platform 7 will experience smaller wave-induced motions in typical sea conditions.

It will also be noted that the maximum wave-induced motions in surge and pitch are smaller for the installation state compared to the initial state. Therefore, even in abnormal sea conditions, when the period of the waves may be above 20 seconds, the maximum wave-induced surge and pitch motions will be smaller for the spar platform 7 in the installation state.

The spar platform 7 may also be moved into a maintenance state such that maintenance and/or repair work can be carried out on the floating offshore wind turbine.

During maintenance and repair, it may be necessary to remove one or more components of the wind turbine, e.g. for inspection, repair or replacement. Maintenance and repair may also require one or more components to be installed on the floating offshore wind turbine 1. For instance, maintenance may involve removing and/or installing one or more blades 6, the rotor 4, the rotor hub 5 and/or the generator.

In the maintenance state, the vertical position and/or the centre of mass of the floating offshore wind turbine 1 may be altered such that the natural periods of the floating offshore wind turbine 1 in heave, roll and pitch $T_{heave}$, $T_{roll}$, $T_{pitch}$ do not align with the period of the waves acting on the floating offshore wind turbine 1. This may involve lowering the vertical position of the floating offshore wind turbine 1 and/or increasing the distance between its centre of gravity 31 and the bottom of the spar platform 7. This may be achieved by pumping water into the second ballast tank 16 and/or pumping water out of the first ballast tank 15. For instance, water may pumped from the first ballast tank 15 to the second ballast tank 16. The maintenance state is designed to prevent large wave-induced motions by **controlling** the natural periods of the floating structure in heave, roll and pitch $T_{heave}$, $T_{roll}$, $T_{pitch}$.

Once in the maintenance state, the component(s) may be removed from the floating offshore wind turbine 1 or installed on the floating offshore wind turbine 1, for instance by a crane. The necessary inspection and/or repair of the floating offshore wind turbine 1 and/or the component(s) may then be carried out. In the maintenance state, the amplitude of the wave-induced motions will be curtailed, making it easier to remove and/or install component(s).

It will be appreciated that, during maintenance and/or repair, the floating characteristics of the floating offshore wind turbine will change as components are removed and/or installed. Hence, the vertical position and/or the centre of gravity of the floating offshore wind turbine 1 may be altered multiple times in order to curtail wave-induced motions. For instance, it may be necessary to adjust the vertical position and/or the centre of gravity each time before a component is removed from or installed on the floating offshore wind turbine 1.

Removing one or more components of the wind turbine will alter the vertical position and the centre of gravity 31 of the floating offshore wind turbine 1 and hence alter the natural periods of the floating structure in heave, roll and pitch

$T_{heave}$, $T_{roll}$, $T_{pitch}$. This may cause the natural periods of the floating offshore wind turbine 1 to align closely with the period of the waves acting on the floating structure and give rise to large wave-induced motions. This may make it difficult or impossible to perform subsequent maintenance or repair operations. Hence, after component(s) have been removed, the vertical position and/or the centre of mass of the floating offshore wind turbine 1 may be altered as discussed above such that the natural periods of the floating offshore wind turbine 1 in heave, roll and pitch $T_{heave}$, $T_{roll}$, $T_{pitch}$ do not align with the period of the waves acting on the floating offshore wind turbine 1.

Compared to removing a component from the wind turbine, installing a component requires greater precision and is more sensitive to motions of the offshore wind turbine. Hence, for wave-induced motions of a certain amplitude, it may be possible to remove component(s) from the offshore wind turbine without moving the spar platform 7 into the maintenance state whereas, for the same wave conditions, it may be more difficult or even impossible to install a component on the floating offshore wind turbine 1 without moving the spar platform 7 into the maintenance state. Accordingly, it may not be necessary to move the spar platform 7 into the maintenance state before removing a component from the offshore wind turbine 1. The maintenance state is more likely to be required during the installation of components on the floating offshore wind turbine 1.

During maintenance, the floating characteristics of the floating offshore wind turbine 1 may not be optimal. For instance, the centre of gravity 31 of the floating offshore wind turbine 1 may be vertically above its centre of buoyancy 30 and so the floating structure may not be stable against overturning. Hence, during maintenance, the floating offshore wind turbine 1 may be supported, for instance by a crane.

**Claims**

1. A floating spar platform (7) for supporting an offshore wind turbine, the spar platform (7) comprising:

   at least one first ballast tank (15) for holding adjustable ballast; and
   at least one second ballast tank (16) for holding adjustable ballast, wherein the second ballast (16) tank is arranged vertically higher than the first ballast tank (15),
   **characterised in that** the first ballast tank (15) is fluidly connected to the second ballast tank (16) through a flow regulating device, and
   the flow regulating device is arranged such that liquid can flow from the second ballast tank (16) to the first ballast tank (15) under gravity when the flow regulating device is open or partially open.

2. A floating spar platform (7) according to claim 1, wherein the spar platform (7) comprises one or more pumps (9) arranged to pump ballast into and/or out of the first and/or second ballast tanks (15, 16).

3. A floating spar platform (7) according to any of claims 1 or 2, wherein the flow regulating device is a control valve (22).

4. A floating spar platform (7) according to any preceding claim, wherein the bottom of the second ballast tank (16) slopes downwardly towards the flow regulating device.

5. A floating spar platform (7) according to any preceding claim, wherein the spar platform (7) is arranged such that when the first and second ballast tanks (15, 16) are empty, the centre of gravity (31) of the spar platform (7) is vertically below the centre of buoyancy (30) of the spar platform (7).

6. A floating spar platform (7) according to any preceding claim, wherein the cross sectional area of the spar platform (7) varies along its length, preferably wherein the cross sectional area of the spar platform (7) decreases from the bottom of the spar platform (7) to the top.

7. A floating spar platform (7) according to any preceding claim, wherein the spar platform (7) includes an internal compartment, the internal compartment being separated into the first and second ballast tanks (15, 16) by a divider (14) arranged across the internal compartment.

8. A floating offshore wind turbine (1) comprising a wind turbine mounted on a floating spar platform (7) according to any preceding claim, wherein the wind turbine comprises:

   a tower (2) mounted on the spar platform (7);
   a nacelle (3) mounted at the top of the tower (2);
   one or more rotor blades (6) rotatably mounted to the nacelle (3) by a rotor hub (5); and

a generator arranged to be driven by rotation of the rotor hub (5).

**Patentansprüche**

1.  Schwimmende Spierenplattform (7) zum Tragen einer Offshore-Windturbine, wobei die Spierenplattform (7) umfasst:

    mindestens einen ersten Ballasttank (15) zum Halten von einstellbarem Ballast; und
    mindestens einen zweiten Ballasttank (16) zum Halten von einstellbarem Ballast, wobei der zweite Ballasttank (16) vertikal höher angeordnet ist als der erste Ballasttank (15),
    **dadurch gekennzeichnet, dass** der erste Ballasttank (15) über eine Durchflussregelvorrichtung fluidisch mit dem zweiten Ballasttank (16) verbunden ist, und
    die Durchflussregelvorrichtung so angeordnet ist, dass Flüssigkeit unter Schwerkraft von dem zweiten Ballasttank (16) zu dem ersten Ballasttank (15) fließen kann, wenn die Durchflussregelvorrichtung geöffnet oder teilweise geöffnet ist.

2.  Schwimmende Spierenplattform (7) nach Anspruch 1, wobei die Spierenplattform (7) eine oder mehrere Pumpen (9) umfasst, die so angeordnet sind, dass sie Ballast in den ersten und/oder zweiten Ballasttank (15, 16) hinein- und/oder aus diesem herauspumpen.

3.  Schwimmende Spierenplattform (7) nach einem der Ansprüche 1 oder 2, wobei die Durchflussregelvorrichtung ein Steuerventil (22) ist.

4.  Schwimmende Spierenplattform (7) nach einem vorstehenden Anspruch, wobei der Boden des zweiten Ballasttanks (16) zur Durchflussregelvorrichtung hin nach unten abfällt.

5.  Schwimmende Spierenplattform (7) nach einem vorstehenden Anspruch, wobei die Spierenplattform (7) so angeordnet ist, dass sich der Schwerpunkt (31) der Spierenplattform (7) vertikal unterhalb des Auftriebszentrums (30) der Spierenplattform (7) befindet, wenn der erste und der zweite Ballasttank (15, 16) leer sind.

6.  Schwimmende Spierenplattform (7) nach einem vorstehenden Anspruch, wobei die Querschnittsfläche der Spierenplattform (7) entlang ihrer Länge variiert, vorzugsweise wobei die Querschnittsfläche der Spierenplattform (7) von dem Boden der Spierenplattform (7) zu der Oberseite hin abnimmt.

7.  Schwimmende Spierenplattform (7) nach einem vorstehenden Anspruch, wobei die Spierenplattform (7) einen Innenraum einschließt, wobei der Innenraum durch eine quer zu dem Innenraum angeordnete Trennwand (14) in den ersten und den zweiten Ballasttank (15, 16) unterteilt ist.

8.  Schwimmende Offshore-Windturbine (1), die eine Windturbine umfasst, die auf einer schwimmenden Spierenplattform (7) nach einem vorstehenden Anspruch montiert ist, wobei die Windturbine umfasst:

    einen Turm (2), der auf der Spierenplattform (7) montiert ist;
    eine Gondel (3), die an der Oberseite des Turms (2) montiert ist;
    ein oder mehrere Rotorblätter (6), die über eine Rotornabe (5) drehbar an der Gondel (3) montiert sind; und
    einen Generator, der so angeordnet ist, dass er durch die Drehung der Rotornabe (5) angetrieben wird.

**Revendications**

1.  Plateforme de longeron (7) flottante pour soutenir une éolienne en mer, la plateforme de longeron (7) comprenant :

    au moins un premier réservoir de ballast (15) pour contenir du ballast réglable ; et
    au moins un deuxième réservoir de ballast (16) pour contenir du ballast réglable, dans laquelle le deuxième réservoir de ballast (16) est agencé verticalement à une hauteur supérieure au premier réservoir de ballast (15),
    **caractérisée en ce que** le premier réservoir de ballast (15) est relié fluidiquement au deuxième réservoir de ballast (16) par l'intermédiaire d'un dispositif de régulation de débit, et
    le dispositif de régulation de débit est agencé de sorte que du liquide puisse s'écouler du deuxième réservoir de ballast (16) vers le premier réservoir de ballast (15) sous gravité lorsque le dispositif de régulation de débit est ouvert ou partiellement ouvert.

2. Plateforme de longeron (7) flottante selon la revendication 1, dans laquelle la plateforme de longeron (7) comprend une ou plusieurs pompes (9) agencées pour pomper du ballast dans et/ou hors des premier et/ou deuxième réservoirs de ballast (15, 16).

3. Plateforme de longeron (7) flottante selon l'une quelconque des revendications 1 ou 2, dans laquelle le dispositif de régulation de débit est une vanne de commande (22).

4. Plateforme de longeron (7) flottante selon une quelconque revendication précédente, dans laquelle le fond du deuxième réservoir de ballast (16) est incliné vers le bas en direction du dispositif de régulation de débit.

5. Plateforme de longeron (7) flottante selon une quelconque revendication précédente, dans laquelle la plateforme de longeron (7) est agencée de sorte que lorsque les premier et deuxième réservoirs de ballast (15, 16) sont vides, le centre de gravité (31) de la plateforme de longeron (7) est verticalement en dessous du centre de flottabilité (30) de la plateforme de longeron (7).

6. Plateforme de longeron (7) flottante selon une quelconque revendication précédente, dans laquelle la zone de coupe en section transversale de la plateforme de longeron (7) varie selon sa longueur, préférablement dans laquelle la zone de coupe en section transversale de la plateforme de longeron (7) diminue du bas de la plateforme de longeron (7) vers le haut.

7. Plateforme de longeron (7) flottante selon une quelconque revendication précédente, dans laquelle la plateforme de longeron (7) inclut un compartiment interne, le compartiment interne étant séparé dans les premier et deuxième réservoirs de ballast (15, 16) par un séparateur (14) agencé à travers le compartiment interne.

8. Éolienne en mer (1) flottante comprenant une éolienne montée sur une plateforme de longeron (7) flottante selon une quelconque revendication précédente, dans laquelle l'éolienne comprend :

une tour (2) montée sur la plateforme de longeron (7) ;
une nacelle (3) montée en haut de la tour (2) ;
une ou plusieurs pales de rotor (6) montées en rotation sur la nacelle (3) par un moyeu de rotor (5) ; et
un générateur agencé pour être entraîné par rotation du moyeu de rotor (5).

Fig. 1

Fig. 2

Fig. 3

Fig. 4

Fig. 5A

Fig. 5B

Fig. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010120186 A1
- WO 2010093259 A2
- ES 2524491 A1